# FASCICULE DE BREVET EUROPEEN

(11) **EP 1 696 220 B1**
(45) Date de publication et mention de la délivrance du brevet: **23.04.2008**
(21) Numéro de dépôt: 06110342.0
(22) Date de dépôt: 23.02.2006
(51) Int. Cl.: G01N 3/00, B23K 26/34, B23P 6/00, F01D 5/00

(54) **Procédé de caractérisation mécanique d'un matériau métallique**
Verfahren zur mechanischen Charakterisierung eines metallischen Materials
Method for the mechanical characterization of a metallic material

(30) Priorité: 25.02.2005 FR 0550518; 29.07.2005 FR 0508150
(43) Date de publication de la demande: 30.08.2006
(73) Titulaire: SNECMA, 75015 Paris (FR); SNECMA SERVICES, 75015 Paris (FR)
(72) Inventeur: Bouet, Bernard, 77220, Gretz Armainvilliers (FR); Kerneis, Stéphane, Michel, 78140, Vélizy (FR); Pagnon, Claude, André, Charles, 17640, Vaux sur Mer (FR); Pinto, Eric, Christian, Jean, 77930, Fleury en Bière (FR)
(74) Mandataire: David, Daniel

(56) Documents cités:
- US-A- 4 409 462
- US-A- 4 730 093
- DATABASE WPI Section Ch, Week 199029 Derwent Publications Ltd., London, GB; Class M14, AN 1990-220881 XP002378339 -& JP 02 149678 A (SHOWA ALUMINIUM CO LTD) 8 juin 1990 (1990-06-08)
- SEMJONOV S ET AL: "FESTIGKEITS- UND ZAHIGKEITSEIGENSCHAFTEN VON LASERSTRAHLPULVERAUFTRAGSCHWEISSUNGEN AUF NICKEL- UND COBALTBASIS BEI ERHOHTEN TEMPERATUREN" SCHWEISSEN UND SCHNEIDEN, DVS VERLAG, DUSSELDORF, DE, vol. 46, no. 12, 1 décembre 1994 (1994-12-01), pages 631-636, XP000484545 ISSN: 0036-7184
- NAKACHO K ET AL: "PREDICTION OF CREEP LIFE OF THICK WELDED JOINTS BY SIMPLE ANALYTICAL MODEL.CREEPPROPERTIES OF THICK WELDED JOINTS AND THEIR IMPROVEMENT (2ND REPORT)" WELDING INTERNATIONAL, WOODHEAD PUBLISHING LIMITED, CAMBRIDGESHIRE, GB, vol. 16, no. 1, 2002, pages 38-43, XP001076427 ISSN: 0950-7116

## Description

La présente invention concerne un procédé permettant la caractérisation mécanique d'un matériau métallique par rapport à un métal constituant une pièce à réparer et la validation d'une installation de réparation de ladite pièce par rechargement avec ledit matériau métallique. Le document US-A-4,730,093 décrit un tel procédé.

La présente invention concerne aussi le domaine des turbomachines, notamment aéronautiques, et vise la réparation de pièces telles que des disques mobiles aubagés.

Afin de répondre aux exigences accrues en performances des moteurs, on fabrique maintenant des roues ou disques aubagés monoblocs, désignés DAM, en alliage de titane pour compresseurs de moteurs à turbine à gaz. Dans un rotor conventionnel, les aubes sont retenues par leur pied qui est monté dans un logement ménagé sur la jante du disque. Les disques et les aubes sont donc fabriqués séparément avant leur assemblage en un rotor aubagé. Dans un DAM, les aubes et le disque sont usinés directement dans une ébauche forgée ; ils ne forment qu'une seule pièce. Cette technique autorise des gains importants sur la masse totale du moteur mais aussi sur les coûts de fabrication.

Cependant, ce type de rotor présente l'inconvénient d'être difficile à réparer. En fonctionnement, les aubes de compresseur peuvent subir des dommages dus aux impacts causés par l'absorption, par le moteur, de corps étrangers ou bien du fait de l'érosion provoquée par les poussières et autres particules entraînées par l'air passant à travers le moteur et venant en contact avec la surface des aubes. Ces usures ou dommages, s'ils ne sont réparables selon les critères de la documentation du constructeur, entraînent le remplacement d'une ou des aubes incriminées. Dans le cas de pièces aubagées monobloc, les aubes sont parties intégrantes d'une pièce massive et, contrairement aux montages conventionnels, elles ne peuvent être remplacées ou même démontées pour être réparées individuellement. Il faut pouvoir réparer la pièce directement sur le disque. La réparation doit alors prendre en compte l'intégralité de la pièce avec ses encombrements, son poids, dans le cas de grandes pièces, et l'accessibilité des zones à réparer.

Ainsi, pour un DAM les zones concernées généralement par la réparation sont, pour chaque aube, le sommet, le coin de pale côté bord d'attaque, le coin de pale côté bord de fuite, le bord d'attaque et le bord de fuite.

Les techniques de réparation qui ont été développées consistent à éliminer la zone endommagée sur les aubes détériorées, puis à remplacer la partie éliminée par une pièce de forme appropriée ou bien par rechargement de matière. Ces techniques mettent en oeuvre généralement un usinage conventionnel pour l'élimination de la partie endommagée, le contrôle sans contact de la pièce réparée, le grenaillage ultrason et un usinage spécifique pour la reprise de la zone réparée.

La présente invention concerne la réparation de pièces par rechargement de matière.

La réparation est particulièrement difficile à réaliser pour certains alliages utilisés dont le soudage entraîne la formation de défauts dans la masse. Il s'agit notamment de l'alliage de titane Ti17. Cet alliage est rapporté par exemple dans la demande de brevet EP1340832 de la Demanderesse portant sur un produit, tel qu'une aube, réalisé en cette matière. Lorsqu'il s'agit de procéder à un rechargement de matière, les techniques de type TIG ou de type à micro-plasma utilisées traditionnellement et couramment dans l'industrie aéronautique ne permettent de traiter le titane Ti17 que pour des applications limitées à des zones faiblement sollicitées.

Ces rechargements conventionnels entraînent la formation de défauts. Ainsi le rechargement TIG, mettant en oeuvre une énergie importante au regard de la faible épaisseur en jeu, est générateur de déformations, et entraîne la formation d'un taux important de porosités, telles que des micro porosités ou micro soufflures, ainsi qu'une zone affectée thermiquement (ZAT) étendue. Ces micro porosités, qui sont très difficilement détectables, sont génératrices d'un abattement jusqu'à 80% en tenue mécanique. Ce type de soudage par rechargement trouve donc une application à des zones faiblement sollicitées, seulement. Le rechargement micro-plasma entraîne la formation d'une ZAT plus faible mais encore relativement élevée. En outre, le procédé oblige à des attentions particulières et un contrôle périodique sur les équipements et produits utilisés afin qu'aucun paramètre de fonctionnement de la machine ne dérive et ne modifie les résultats attendus.

Le brevet US 6568077 décrit un procédé de réparation d'une aube sur un disque DAM selon lequel on usine la partie endommagée de l'aube puis, suivant un premier mode opératoire, on recharge la partie manquante par le dépôt de métal au moyen d'une machine de soudage à l'arc et électrode de tungstène, technique TIG. Suivant un second mode opératoire, on soude un insert au moyen d'une machine de soudage par faisceau d'électron. Le profil de l'aube est ensuite restauré par un usinage approprié. Ce procédé cependant ne mentionne pas le problème rencontré avec le soudage de certains alliages de titane.

En particulier, le rechargement par faisceau laser est une technique permettant d'éviter les défauts dans la zone de soudage.

Le rechargement par faisceau laser est déjà connu et utilisé, par exemple, dans les applications où il s'agit de générer des contours métalliques, notamment à partir de données CAO. Les parois ont une épaisseur comprise entre 0,05 et 3 mm et les couches sont de 0,05 à 1 mm de hauteur. Il permet d'obtenir une excellente liaison métallurgique avec le substrat.

La technique de rechargement au moyen d'un faisceau laser présente les avantages suivants : l'apport de chaleur est constant dans le temps. La chaleur n'a pas le temps de s'emmagasiner dans la masse et de diffuser ; il s'ensuit un dégazage peu important dans le cas du titane et une limite de l'abattement en résistance. En outre la répétitivité et la fiabilité de cette technique sont bonnes, une fois les paramètres machine fixés ; son pilotage est aisé.

Les techniques laser employées actuellement mettent en oeuvre des actions simultanées d'apport de matériau et d'irradiation par faisceau laser du substrat. Le matériau est déposé généralement sur la zone de travail sous la forme d'une poudre ou d'un fil métallique. Selon d'autres réalisations, il est projeté sous la forme de jets de poudre vers la zone de travail à l'aide d'une buse adaptée.

Cependant la mise en oeuvre d'un tel procédé est délicate.

Il est nécessaire d'une part de s'assurer que le matériau métallique de rechargement convienne pour la réparation sans abattement préjudiciable des propriétés mécaniques de la zone réparée.

D'autre part, il est également nécessaire que l'installation concernée soit apte à fournir une réparation sans abattement préjudiciable non plus des propriétés du matériau.

L'invention a donc pour objet un procédé permettant la caractérisation mécanique d'un matériau métallique par rapport à un métal constituant une pièce à réparer et la validation d'une installation de réparation de ladite pièce métallique par rechargement avec ledit matériau métallique, caractérisé par le fait qu'il consiste :
- usiner une cavité dans un barreau constitué du métal de la pièce à réparer
- recharger la cavité au moyen de ladite installation avec ledit matériau métallique
- découper une éprouvette dans ledit barreau de manière à ce qu'elle présente une zone centrale constituée uniquement du matériau métallique rechargé
- soumettre l'éprouvette à un test de fatigue vibratoire axiale pour déterminer l'abattement des propriétés mécaniques par rapport au métal constituant la pièce.

Dans la mesure où pour la réparation de pièces, le fabricant ou l'utilisateur des machines est conduit à faire appel à des sous-traitants de toute origine utilisant le cas échéant des alliages non identiques à celui constituant les pièces, il est important de disposer d'un moyen simple permettant de vérifier que les pièces peuvent être réparées de manière satisfaisante. Le procédé de l'invention répond donc à cet objectif. Il suffit que le fabricant ou l'utilisateur fournisse au sous-traitant une série d'éprouvettes mentionnées ci-dessus et que ce dernier les lui retourne après avoir procédé à un rechargement selon le présent procédé. L'analyse effectuée sur les échantillons après rupture résultant des essais donnera une image précise de la capacité à produire une réparation satisfaisante en terme de tenue mécanique.

Le procédé vise une installation préférentiellement de type à rechargement laser, cependant il reste applicable à tout type de rechargement.

Le procédé vise en particulier un matériau métallique en alliage de titane, notamment le Ti17 ou le TA6V pour une pièce également en alliage de titane.

Avantageusement le barreau a une forme parallélépipédique, et la cavité usinée dans le barreau a une forme correspondant à celle ménagée dans la pièce à réparer. En particulier, la cavité est cylindrique d'axe transversal par rapport au barreau.

On décrit maintenant plus en détail l'invention, en référence aux dessins sur lesquels :
- la figure 1 représente une vue partielle de disque aubagé monobloc,
- la figure 2 représente une vue schématique en coupe d'une buse de rechargement,
- les figures 3 à 6 montrent une éprouvette de caractérisation mécanique avec rechargement laser conforme à l'invention.
- la figure 7 montre l'étape d'essais en fatigue vibratoire d'une éprouvette rechargée.
- la figure 8 montre une macrophotographie de la surface de rupture.
- la figure 9 montre un graphique d'analyse des résultats d'essais.

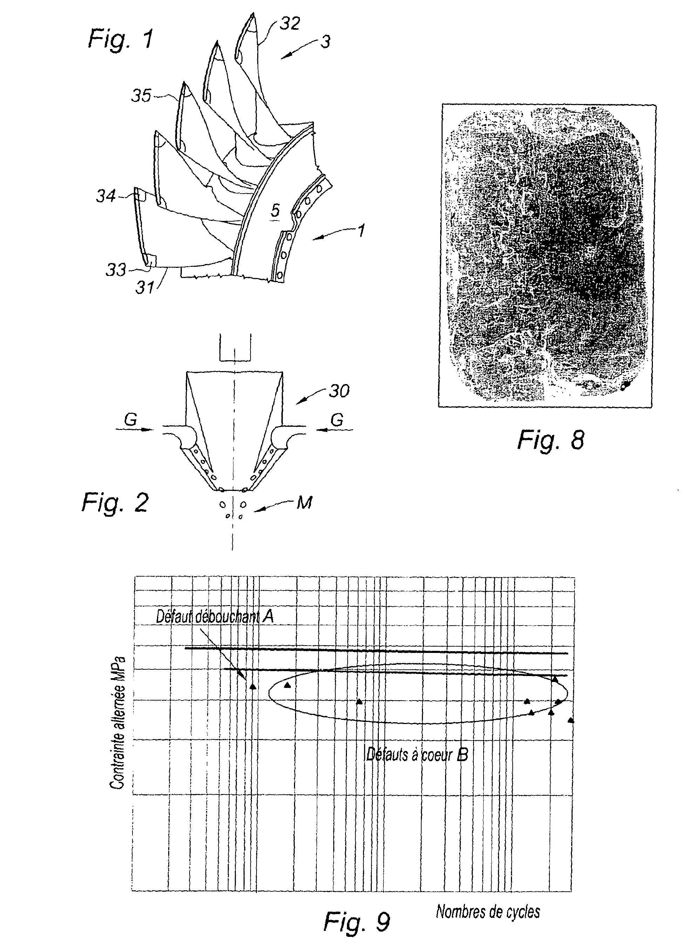

On voit sur la figure 1 une partie d'un disque aubagé monobloc 1. Les aubes 3 sont radiales et réparties à la périphérie d'un disque 5. L'ensemble est monobloc en ce sens qu'il a été fabriqué soit par usinage d'une ébauche unique, soit par soudage d'une partie au moins de ses composants. Les aubes en particulier ne sont pas liées au disque par des moyens mécaniques démontables. Les zones susceptibles d'être endommagées sont les bords d'attaque 31, les bords de fuite 32, les coins de bord d'attaque 33, les coins de bord de fuite 34 ainsi que la ligne du sommet de pale 35 pourvue d'une portion amincie formant léchette d'étanchéité comme cela est connu.

Les dommages que l'on constate dépendent de la position de la zone. En bord d'attaque, de fuite ou en coin de pale par exemple il peut s'agir d'une perte de matière causée par l'impact d'un objet étranger ou bien d'une crique. En sommet de pale, il s'agit le plus souvent d'une usure due aux frottements avec le carter du moteur.

Selon la zone endommagée, on enlève une quantité de matière telle que la géométrie, les dimensions et les cotes de la zone à réparer soient déterminées. Cette mise en forme se fait par usinage mécanique, notamment par fraisage sur un outillage adapté, selon une gamme assurant un état de surface compatible avec la qualité du rechargement recherchée.

On procède ensuite au nettoyage de la surface de soudage destinée à recevoir le métal d'apport, à la fois mécaniquement et chimiquement. Ce nettoyage est adapté au matériau du substrat. Cela est important pour l'alliage de titane Ti17 en particulier ou l'alliage TA6V.

On a représenté sur la figure 2, une buse 30 de rechargement par faisceau laser. Cette buse comprend des canaux d'alimentation en poudre de métal à déposer sur la zone à réparer suivant l'axe de propagation du faisceau laser. Le faisceau est dirigé vers la pièce et la poudre de métal M est entraînée par un flux de gaz G sur la zone chauffée par le faisceau.

La buse se déplace le long de la zone à réparer dans un mouvement de va et vient construisant progressivement un empilement de couches de matière déposée et mise en fusion par le faisceau laser. Le rechargement est effectué à vitesse et intensité constantes même si l'épaisseur sur la pièce varie.

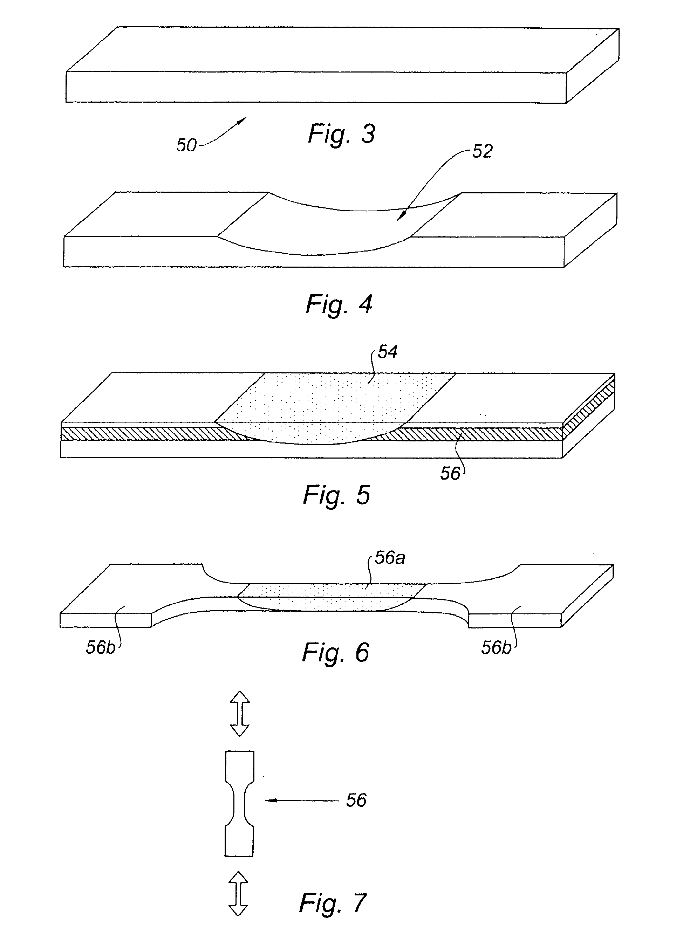

Les paramètres sont adaptés pour limiter notamment les déformations internes et le réusinage, ainsi que l'étendue de la zone affectée thermiquement (zat). Les paramètres à prendre en compte pour le rechargement sont :
- la hauteur du point de focalisation du faisceau laser (de préférence un laser YAG) par rapport à la surface,
- la vitesse d'avance de la tête 30,
- l'énergie appliquée par le faisceau.
- la poudre utilisée (Ti17 ou TA6V) qui n'est pas nécessairement du même métal que le substrat, sa granulométrie, de préférence entre 30 et 100 µm; son point de focalisation,
- la nature du gaz d'entraînement et de confinement, de préférence hélium ou argon.
   On a défini au préalable le type de buse à utiliser. La vitesse et l'énergie sont liées au type de machine mis en oeuvre.
   En particulier, dans le cas du titane Ti17, pour éviter l'apparition de porosités dans la masse, on a constaté que la variation des paramètres ne devait pas dépasser +ou - 5%.
   L'invention porte sur la validation d'une installation de soudage par faisceau laser pour la mise en oeuvre du procédé de réparation par rechargement. En effet, avant mettre une machine en service et le dédier à la réparation de DAM par rechargement, il est nécessaire de vérifier si les pièces réparées ne souffriront pas d'un abattement préjudiciable à leur usage.
   On procède à cette validation en réalisant des essais sur des éprouvettes dites de caractérisation et de validation. Ces éprouvettes 50 représentées sur les figures 3 à 6 permettent
- de contrôler visuellement l'existence de non oxydation et de mesurer la géométrie du rechargement,
- d'évaluer la qualité métallurgique du rechargement après usinage, sans et avec traitement thermique, par des contrôles non destructifs et destructifs, tels que le ressuage et les coupes micrographiques,
- de caractériser le matériau Ti17 rechargé laser, après usinage et traitement thermique, en tenue mécanique c'est-à-dire en procédant à des essais de fatigue cyclique (HCF).

Dans le cas particulier de réparation de DAM, on utilise de préférence un barreau 50 issu d'une ébauche forgée de DAM, car il présente alors un sens de fibrage de même nature que les DAM qui seront réparés avec une telle installation. Pour effectuer ces tests le barreau est parallélépipédique avec, par exemple, les dimensions suivantes : 100mm x 19mm x 8mm.

Comme on le voit sur la figure 4, on usine une empreinte 52 dont la géométrie du profil correspond à une cavité que l'on creuse dans une zone endommagée du bord d'attaque ou du bord de fuite d'une pale pour former une zone à réparer. Ici cette cavité a une forme cylindrique dont l'axe est transversal par rapport à celui du barreau.

Le barreau 50 est plus large qu'une pale. On procède au rechargement, figure 5, de cette empreinte 52 au moyen de l'installation que l'on souhaite valider. La cavité a une profondeur suffisante, par exemple une profondeur maximale de 5 mm, pour qu'il soit nécessaire de procéder par empilement de plusieurs couches. Par ailleurs, en raison de la largeur du barreau, on effectue le rechargement en croisant les différentes couches.

Lorsque le rechargement est fini, comme cela est représenté sur la figure 5, avec éventuellement quelques débordements considérés sans conséquence, on découpe une tranche 56 du barreau. Cette tranche 56, représentée hachurée sur la figure 5 englobe la partie rechargée 54. Comme on le voit sur la figure, la tranche est parallèle et légèrement en retrait, de 1 mm par exemple, par rapport à la surface sur laquelle, on a effectué le rechargement. Par exemple pour un barreau de 8 mm d'épaisseur, on extrait une tranche de 2,5mm d'épaisseur. Cette tranche comprend alors trois parties distinctes ave une partie centrale constituée uniquement du métal rechargé entre deux éléments du barreau d'origine.

La figure 6 montre cette tranche 56 que l'on a usinée pour obtenir une partie centrale 56a formant une barre incorporant la zone rechargée. Dans sa partie médiane, toute l'épaisseur de la barre 56a est constituée de matière rechargée. De part et d'autre de la barre 56a des pattes plus larges 56b, forment des pattes de préhension pour les mâchoires des appareils avec lesquels on pratique les essais de fatigue cyclique.

Ces essais, schématisés sur la figure 7, consistent à appliquer des efforts axiaux de compression et de traction, en alternance. La fréquence, l'amplitude des vibrations, le nombre de cycles et la température, en particulier, sont déterminés.

Sur la figure 8, on a représenté une macrophotographie de la surface de l'éprouvette cassée. L'éprouvette est rompue dans la zone rechargée. L'examen de cette surface permet de vérifier la qualité du rechargement et d'observer la nature des défauts présents. Pour différentes éprouvettes, on relève sur un graphique à échelle logarithmique en abscisses, le niveau des contraintes alternées en MPa et à partir de quel nombre de cycles, la rupture est intervenue. Par exemple, sur ce graphique regroupant un échantillon de plusieurs éprouvettes, on a reporté la survenue de la rupture des différentes éprouvettes causée par d'un défaut débouchant A ou de défauts à coeur B

A partir de l'analyse des résultats, on détermine ainsi un taux d'abattement du matériau pour l'installation visée. Ce taux est le rapport entre la tenue mécanique du matériau après rechargement et la tenue mécanique de ce matériau sur une pièce neuve.

Lorsque les essais sur les éprouvettes sont satisfaisants et que le taux dépasse une valeur de seuil minimal, déterminée expérimentalement, on valide l'installation.

## Revendications

1. Procédé permettant la caractérisation mécanique d'un matériau métallique par rapport à un métal constituant une pièce à réparer et la validation d'une installation de réparation de la dite pièce par rechargement avec ledit matériau métallique, **caractérisé par le fait qu**'il consiste :
- usiner une cavité (52) dans un barreau (50) dudit métal
- recharger (54) la cavité au moyen de ladite installation
- découper une éprouvette (56) dans ledit barreau de manière à ce qu'elle présente une zone centrale (56a) constituée uniquement de métal rechargé
- soumettre l'éprouvette à un test de fatigue vibratoire axiale

2. Procédé selon la revendication 1 dont l'installation est de type à rechargement laser.

3. Procédé selon la revendication 1 ou 2 dont le matériau métallique est un alliage de titane, notamment le Ti17 ou le TA6V.

4. Procédé selon la revendication 1 dont le barreau (50) a une forme parallélépipédique, et la cavité (52) usinée dans le barreau a une forme correspondant à celle ménagée dans la pièce à réparer.

5. Procédé selon la revendication précédente, dont la cavité est cylindrique d'axe transversal par rapport au barreau.

## Claims

1. Method for the mechanical characterization of a metallic material relative to a metal constituting a part to be repaired and for validating an installation for repairing said part by build-up welding with said metallic material, **characterized in that** it consists in:
- machining a cavity (52) in a bar (50) of said metal;
- build-up welding (54) the cavity by means of said installation;
- cutting a test piece (56) from said bar so that it has a central zone (56a) consisting only of built-up weld metal; and
- subjecting the test piece to an axial vibration fatigue test.

2. Method according to Claim 1, the installation of which is of the laser build-up welding type.

3. Method according to Claim 1 or 2, in which the metallic material is a titanium alloy, especially Ti17 or TA6V.

4. Method according to Claim 1, in which the bar (50) has a parallelepipedal shape and the cavity (52) machined in the bar has a shape corresponding to that made in the part to be repaired.

5. Method according to the preceding claim, in which the cavity is cylindrical with an axis transverse to the bar.

## Patentansprüche

1. Verfahren zur mechanischen Charakterisierung eines metallischen Materials im Vergleich zu einem Metall, das ein zu reparierendes Werkstück bildet, und Freigabe einer Anlage zur Reparatur dieses Werkstücks durch Wiederauffüllen mit diesem metallischen Material,
**dadurch gekennzeichnet,**
**dass** es darin besteht:
- in einem Barren (50) dieses Metalls eine Aushöhlung (52) zu formen,
- die Aushöhlung mittels dieser Anlage aufzufüllen (54),
- ein Probestück (56) aus diesem Barren dergestalt zu schneiden, dass es einen mittleren Bereich (56a) aufweist, der ausschließlich aufgefülltes Metall darstellt,
- das Probestück in einer Ermüdungsprüfung axialen Schwingungen auszusetzen.

2. Verfahren nach Anspruch 1, wobei die Anlage eine Anlage zum Wiederauffüllen durch Laser ist.

3. Verfahren nach Anspruch 1 oder 2, wobei das metallische Material eine Titanlegierung ist, insbesondere Ti17 oder TA6V.

4. Verfahren nach Anspruch 1, wobei der Barren (50) quaderförmig ausgeführt ist, und die in dem Barren geformte Aushöhlung (52) in der Form der in dem zu reparierenden Werkstück gebildeten Aushöhlung entspricht.

5. Verfahren nach dem vorherigen Anspruch, wobei die Aushöhlung zylinderförmig mit quer zu dem Barren verlaufender Achse ausgeführt ist.
